# EUROPEAN PATENT SPECIFICATION

(11) **EP 4 067 139 B1**
(45) Date of publication and mention of the grant of the patent: **21.02.2024**
(21) Application number: 22160293.1
(22) Date of filing: 04.03.2022
(51) Int. Cl.: B60K 1/04, B62D 21/15

(54) **VEHICLE COMPRISING A VEHICLE BATTERY PACK UNIT**
FAHRZEUG MIT EINER FAHRZEUGBATTERIEPACKEINHEIT
VÉHICULE COMPRENANT UNE UNITÉ DE BLOC BATTERIE DE VÉHICULE

(30) Priority: 02.04.2021 JP 2021063421
(43) Date of publication of application: 05.10.2022
(73) Proprietor: Prime Planet Energy & Solutions, Inc., Chuo-ku Tokyo 103-0022 (JP)
(72) Inventor: YOSHIDA, Naotake, Tokyo, 103-0022 (JP); MATSUYAMA, Satoru, Tokyo, 103-0022 (JP); MOGI, Yuya, Tokyo, 103-0022 (JP)
(74) Representative: Kuhnen & Wacker Patent- und Rechtsanwaltsbüro PartG mbB

(56) References cited:
- WO-A1-2020/094662
- WO-A1-2020/160747
- JP-A- 2018 098 033

## Description

This nonprovisional application is based on Japanese Patent Application No. 2021-063421 filed on April 2, 2021, with the Japan Patent Office.

### BACKGROUND OF THE INVENTION

### Field of the Invention

The present technology relates to a vehicle including a battery pack unit. Description of the Background Art

JP 2018-98033 A is a prior art document that discloses a battery module structure for an electrically powered truck. The battery module structure for an electrically powered truck as described in JP 2018- 8033 A includes a socket base and a plurality of battery sockets. The socket base is provided between portions of a chassis frame of the electrically powered truck. A plurality of battery cells are attachable to the plurality of battery sockets on a second surface of the socket base opposite to a first surface thereof facing a mounted object.

When a battery pack is mounted inside a ladder frame serving as the chassis frame, a space for mounting the battery pack is limited, with the result that a battery capacity cannot be made large. When the battery pack is disposed outside the ladder frame in order to attain a large battery capacity, a shock in the event of collision of the vehicle may be applied to a power storage module.

WO 2020/160747 A discloses a commercial vehicle comprising a chassis adjoining a cab along a longitudinal direction, the commercial vehicle being at least partly electrically powered, wherein the commercial vehicle has at least one battery structure rigidly attached to the chassis to accommodate a battery, the battery structure comprising first and second brackets extending in a transverse direction at a distance from each other along the longitudinal direction, wherein the battery structure comprises at least one resiliently deformable arrangement through which the battery is mounted on the first bracket, and at least one fixation arrangement through which the battery is rigidly mounted on the second bracket.

Further prior art can be found in JP 2018-098033 A and WO 2020/094662 A1.

### SUMMARY OF THE INVENTION

An object of the present technology is to provide a vehicle including a battery pack unit so as to attain a large battery capacity and suppress a shock in the event of collision of a vehicle from being applied to a power storage module.

A vehicle according to the present technology includes a ladder frame, a side guard and battery pack unit. The vehicle battery pack unit includes a battery pack, a bracket, and a shock absorbing member. The battery pack includes a housing and a power storage module accommodated in the housing. The bracket is attached to the ladder frame. The bracket supports the power storage module between the ladder frame and the side guard. The shock absorbing member is disposed beside the power storage module. The shock absorbing member is attached to a side surface of the housing. The side guard is disposed at a lower portion of a side surface of the vehicle and fixed to the ladder frame and the shock absorbing member is connected to the side guard.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing a basic configuration of an assembled battery.
Fig. 2 is a diagram showing a battery cell in the assembled battery.
Fig. 3 is a cross sectional view showing a configuration of a battery pack unit according to the first embodiment.
Fig. 4 is a perspective view showing a state in which a side guard is attached to a shock absorbing member.
Fig. 5 is a side view viewed in a direction V in Fig. 4.
Fig. 6 is a cross sectional view showing a configuration of a battery pack unit according to a second embodiment.
Fig. 7 is a cross sectional view showing a configuration of a battery pack unit according to a third embodiment.
Fig. 8 is a cross sectional view showing a configuration of a battery pack unit according to a fourth embodiment.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly.

It should be noted that in the present specification, the terms "comprise", "include", and "have" are open-end terms. That is, when a certain configuration is included, a configuration other than the foregoing configuration may or may not be included. Further, the present technology is not limited to one that necessarily exhibits all the functions and effects stated in the present embodiment.

In the present specification, the term "battery" is not limited to a lithium ion battery, and may include another battery such as a nickel-metal hydride battery. In the present specification, the term "electrode" may collectively represent a positive electrode and a negative electrode. Further, the term "electrode plate" may collectively represent a positive electrode plate and a negative electrode plate. The term "current collecting portion" may collectively represent a positive electrode current collecting member and a negative electrode current collecting member.

In the present specification, the "power storage cell" or the "power storage module" is not limited to a battery cell or a battery module, and may include a capacitor cell or a capacitor module.

### (First Embodiment)

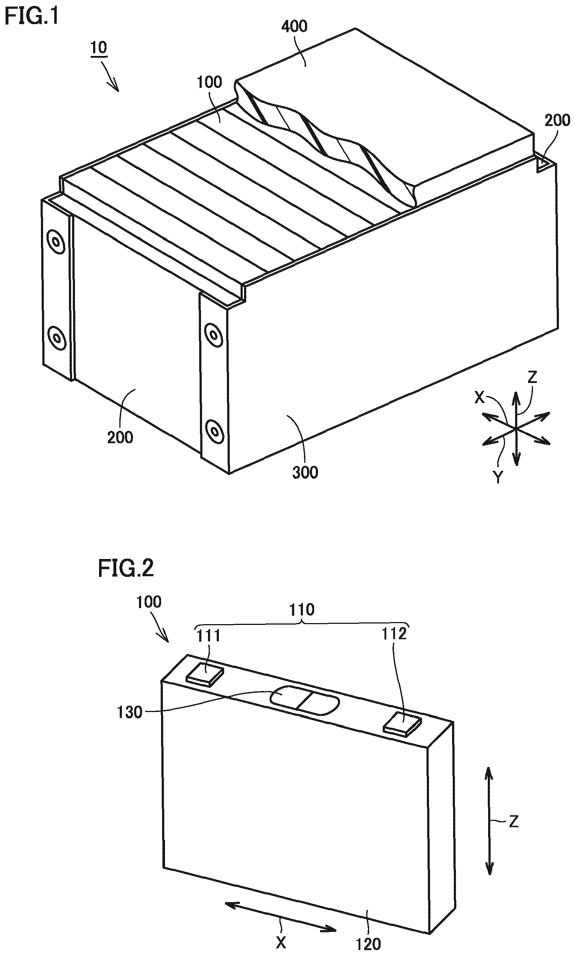

Fig. 1 is a diagram showing a basic configuration of an assembled battery. As shown in Fig. 1, an assembled battery 10, which serves as an exemplary "power storage module", includes battery cells 100, end plates 200, a binding bar 300, and a resin plate 400.

The plurality of battery cells 100 are provided side by side in a Y axis direction (arrangement direction). Thus, a stack of battery cells 100 is formed. A separator (not shown) is interposed between battery cells 100. The plurality of battery cells 100, which are sandwiched between two end plates 200, are pressed by end plates 200, and are therefore restrained between two end plates 200. End plates 200 are disposed beside both ends of assembled battery 10 in the Y axis direction.

Binding bar 300 connects two end plates 200 to each other. Binding bar 300 is engaged with end plates 200 with compression force in the Y axis direction being exerted to the stack of the plurality of battery cells 100 and end plates 200, and then the compression force is released, with the result that tensile force acts on binding bar 300 that connects two end plates 200 to each other. As a reaction thereto, binding bar 300 presses two end plates 200 in directions of bringing them closer to each other.

Fig. 2 is a diagram showing a battery cell in the assembled battery. As shown in Fig. 2, battery cell 100 includes an electrode terminal 110, a housing 120, and a gas discharge valve 130.

Electrode terminal 110 includes a positive electrode terminal 111 and a negative electrode terminal 112. Electrode terminal 110 is formed on housing 120. Housing 120 is formed to have a substantially rectangular parallelepiped shape. An electrode assembly (not shown) and an electrolyte solution (not shown) are accommodated in housing 120. Gas discharge valve 130 is formed at an intermediate position between positive electrode terminal 111 and negative electrode terminal 112 on housing 120. Gas discharge valve 130 is fractured when pressure inside housing 120 becomes more than or equal to a threshold value. Thus, a combustible gas in housing 120 is discharged to the outside of housing 120.

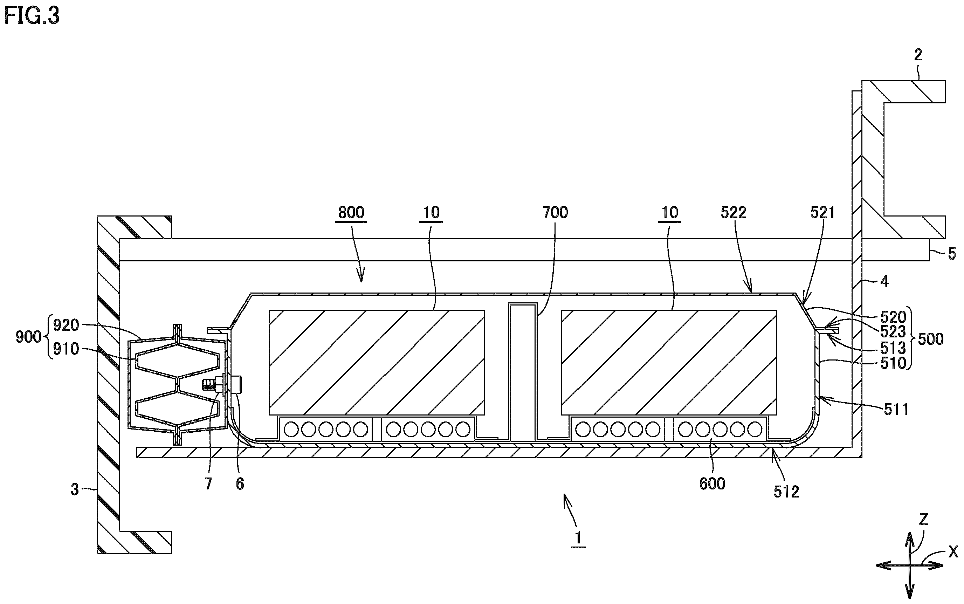

Fig. 3 is a cross sectional view showing a configuration of a battery pack unit according to the first embodiment. Fig. 3 shows the battery pack unit disposed on one of sides of a vehicle. The vehicle may be, for example, a commercial vehicle such as a truck.

As shown in Fig. 3, a battery pack unit 1 according to the first embodiment is a vehicle battery pack unit disposed in a vehicle having a ladder frame 2 and a side guard 3. Ladder frame 2 has a shape of ladder and extends in the Y axis direction.

Side guard 3 has a substantially flat plate shape extending in an upward/downward direction (Z axis direction) and the Y axis direction. Side guard 3 is disposed at a lower portion of a side surface of the vehicle and is fixed to ladder frame 2. In the present embodiment, side guard 3 is fixed to and supported by a supporting member 5 attached to the lower surface of ladder frame 2.

Battery pack unit 1 includes a battery pack 800, a bracket 4, and a shock absorbing member 900. Battery pack 800 includes: a housing 500; and assembled batteries 10 accommodated in housing 500. Housing 500 is constituted of a pack bottom portion 510 and a pack cover portion 520.

Pack bottom portion 510 includes a bottom surface portion 512, a side surface portion 511, and a flange portion 513. In the present embodiment, bottom surface portion 512 has a shape of quadrangular flat plate. Side surface portion 511 is provided to extend from a peripheral edge of bottom surface portion 512 in the upward/downward direction (Z axis direction). Flange portion 513 extends outward from the upper end of side surface portion 511 in the horizontal direction.

Pack cover portion 520 includes a cover surface portion 522, a side surface portion 521, and a flange portion 523. Cover surface portion 522 is disposed to face bottom surface portion 512. Side surface portion 521 is provided to extend from a peripheral edge of cover surface portion 522 in the upward/downward direction (Z axis direction). Flange portion 523 extends outward from the lower end of side surface portion 521 in the horizontal direction.

Pack cover portion 520 is combined with pack bottom portion 510, and pack cover portion 520 and pack bottom portion 510 accommodate assembled batteries 10. Specifically, in a state in which flange portion 523 of pack cover portion 520 and flange portion 513 of pack bottom portion 510 are connected to each other, assembled batteries 10 are accommodated in a space between pack bottom portion 510 and pack cover portion 520. Each of assembled batteries 10 is placed on pack bottom portion 510 with a cooling plate 600, which will be described later, being interposed therebetween.

In the present embodiment, the plurality of assembled batteries 10 are accommodated in housing 500. It should be noted that only one assembled battery 10 may be accommodated in housing 500.

A shock absorbing member 700, which is capable of absorbing a shock in the Y axis direction, is disposed between assembled batteries 10 adjacent to each other in the width direction (X axis direction) of each assembled battery 10. Shock absorbing member 700 is disposed in contact with the inner surfaces of the both ends of housing 500 in the Y axis direction. Shock absorbing member 700 is, for example, a crash box in which a plurality of inner tubular portions are formed in an outer tubular portion. Shock absorbing member 700 is composed of an aluminum alloy or the like.

When a shock in the Y axis direction is applied, shock absorbing member 700 is deformed to absorb the shock energy, thereby suppressing the shock in the Y axis direction from being applied to assembled batteries 10. It should be noted that shock absorbing member 700 may not be necessarily provided.

In the present embodiment, battery pack 800 further includes cooling plates 600 placed on pack bottom portion 510. Each of cooling plate 600 cools assembled battery 10. In the present embodiment, cooling plate 600 is configured to permit cooling water to circulate inside cooling plate 600, but may be constituted of a metal plate having a heat radiating fin. Further, cooling plate 600 may not be necessarily provided.

Bracket 4 is attached to ladder frame 2. Bracket 4 supports assembled batteries 10 between ladder frame 2 and side guard 3. Specifically, bracket 4 has an L shape when viewed in the Y axis direction. A portion of bracket 4 extending in the upward/downward direction is attached to the outer side surface of ladder frame 2, and battery pack 800 is placed on and fixed to a portion of bracket 4 extending in the horizontal direction. Bracket 4 is composed of an iron/steel material, CFRP (Carbon Fiber Reinforced Plastics), or the like.

Shock absorbing member 900 is disposed beside assembled battery 10. In the present embodiment, shock absorbing member 900 is attached to a side surface of housing 500. Specifically, shock absorbing member 900 is attached to side surface portion 511 of pack bottom portion 510 facing side guard 3, by a bolt 6 and a nut 7 screwed together. Shock absorbing member 900 is located between side guard 3 and battery pack 800. Shock absorbing member 900 extends in the Y axis direction to cover a range in which assembled batteries 10 are located in the Y axis direction.

Shock absorbing member 900 is a crash box in which a plurality of inner tubular portions 910 are formed in an outer tubular portion 920. Each of outer tubular portion 920 and inner tubular portions 910 is formed by overlapping a plurality of bent metal plates with each other and connecting them to each other. Shock absorbing member 900 is composed of an aluminum alloy or the like.

When a shock in the X axis direction is applied, shock absorbing member 900 is deformed to absorb the shock energy, thereby suppressing the shock in the X axis direction from being applied to assembled batteries 10.

In battery pack unit 1 according to the first embodiment, since battery pack 800 is mounted outside ladder frame 2, a wide space for mounting battery pack 800 can be secured, thereby attaining a large battery capacity. Further, since shock absorbing member 900 is disposed beside assembled battery 10, a shock in the X axis direction in the event of collision of the vehicle can be suppressed from being applied to assembled batteries 10. As a result, the safety of battery cell 100 can be improved.

In battery pack unit 1 according to the first embodiment, shock absorbing member 900 is attached to the side surface of housing 500. Thus, housing 500 can be suppressed from being damaged when a shock in the X axis direction is applied. As a result, a shock can be suppressed from being applied to assembled battery 10.

Although shock absorbing member 900 is disposed outside housing 500 in the present embodiment, shock absorbing member 900 may be disposed beside assembled battery 10 in housing 500. Also in this case, a shock in the X axis direction in the event of collision of the vehicle can be suppressed by shock absorbing member 900 from being applied to assembled battery 10.

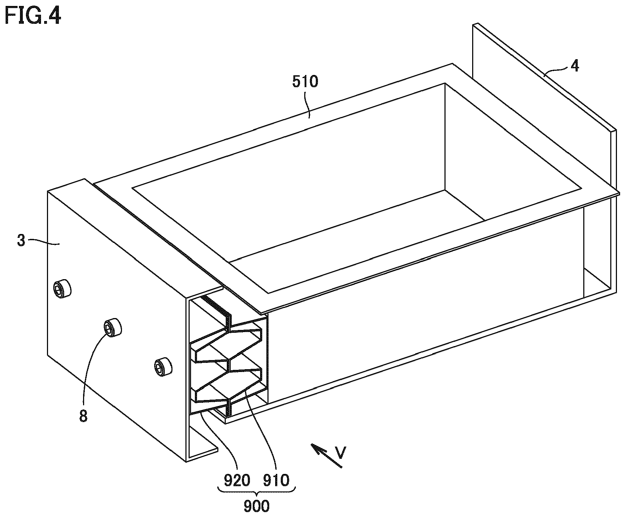

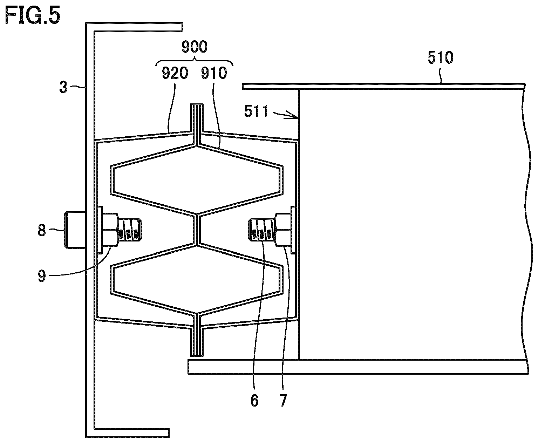

It should be noted that side guard 3 may be attached to shock absorbing member 900. Fig. 4 is a perspective view showing a state in which the side guard is attached to the shock absorbing member. Fig. 5 is a side view when viewed in a direction V in Fig. 4. In Figs. 4 and 5, only pack bottom portion 510 is shown in the battery pack.

As shown in Figs. 4 and 5, in the battery pack unit according to the modification, shock absorbing member 900 is connected to side guard 3. Specifically, one side of outer tubular portion 920 of shock absorbing member 900 is fastened to the side surface of housing 500 by bolt 6 and nut 7, and the other side of outer tubular portion 920 is fastened to side guard 3 by a bolt 8 and a nut 9.

In the present modification, since side guard 3 and shock absorbing member 900 are in surface contact with each other, a shock in the X axis direction in the event of collision of the vehicle can be received by the entire surface of shock absorbing member 900 that is in contact with side guard 3, with the result that the shock can be effectively suppressed by shock absorbing member 900 from being applied to assembled batteries 10.

### (Second Embodiment)

Hereinafter, a battery pack unit according to a second embodiment will be described with reference to figures. Because the battery pack unit according to the second embodiment is different from the battery pack unit according to the first embodiment in that a portion of the bracket constitutes a side guard, the same configurations as those of the battery pack unit according to the first embodiment will not be described repeatedly.

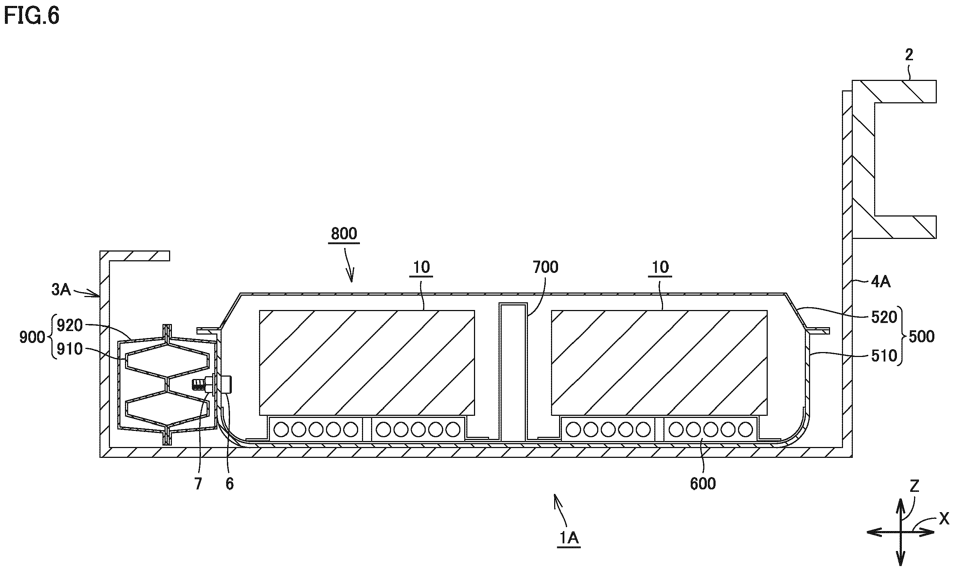

Fig. 6 is a cross sectional view showing the configuration of the battery pack unit according to the second embodiment. Fig. 6 shows the battery pack unit disposed on one of the sides of the vehicle.

As shown in Fig. 6, in a battery pack unit 1A according to the second embodiment, a portion of a bracket 4A constitutes a side guard 3A. Specifically, an end portion of bracket 4A opposite to the ladder frame 2 side in the X axis direction extends in the upward/downward direction to face shock absorbing member 900, thereby functioning as side guard 3A.

In battery pack unit 1A according to the second embodiment, no connection member for supporting side guard 3A is necessary, thereby attaining a reduced weight of battery pack unit 1A. Further, the number of steps in assembling battery pack unit 1A can be reduced.

### (Third Embodiment)

Hereinafter, a battery pack unit according to a third embodiment will be described with reference to figures. Because the battery pack unit according to the third embodiment is different from the battery pack unit according to the first embodiment in that a portion of the shock absorbing member constitutes a side guard, the same configurations as those of the battery pack unit according to the first embodiment will not be described repeatedly.

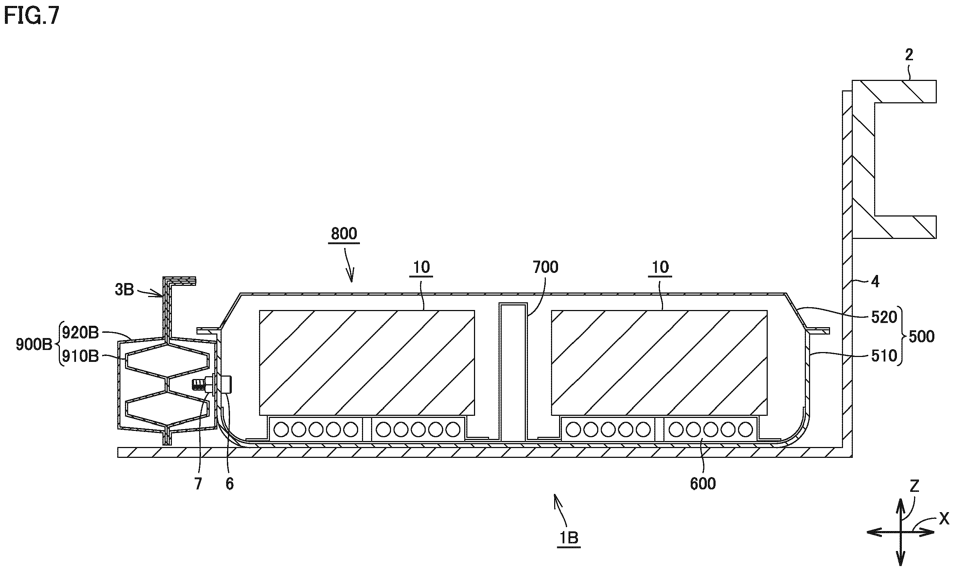

Fig. 7 is a cross sectional view showing a configuration of a battery pack unit according to a third embodiment. Fig. 7 shows the battery pack unit disposed on one of the sides of the vehicle.

As shown in Fig. 7, in a battery pack unit 1B according to the third embodiment, a portion of a shock absorbing member 900B constitutes a side guard 3B. Specifically, the upper portion of shock absorbing member 900B has a portion at which a plurality of metal plates constituting an outer tubular portion 920B and inner tubular portions 910B are stacked and which extends in the upward/downward direction, and this portion of the upper portion of shock absorbing member 900B and the metal plate constituting outer tubular portion 920B located opposite to the battery pack 800 side function as side guard 3B.

In battery pack unit 1B according to the third embodiment, no connection member for supporting side guard 3B is necessary, thereby attaining a reduced weight of battery pack unit 1B. Further, the number of steps in assembling battery pack unit 1B can be reduced.

### (Fourth Embodiment)

Hereinafter, a battery pack unit according to a fourth embodiment will be described with reference to figures. Because the battery pack unit according to the fourth embodiment is different from the battery pack unit according to the first embodiment in that a portion of the shock absorbing member constitutes a side guard and the bracket constitutes a portion of the housing, the same configurations as those of the battery pack unit according to the first embodiment will not be described repeatedly.

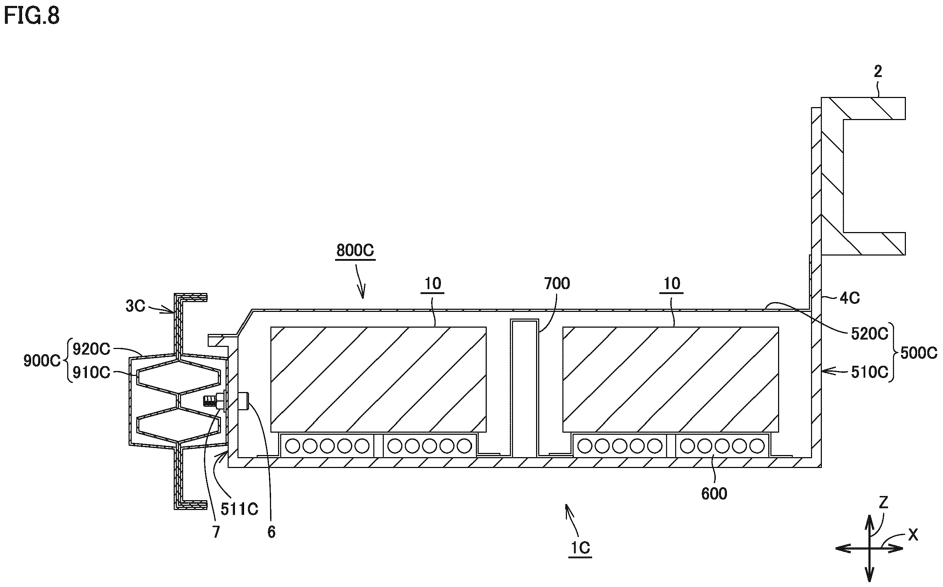

Fig. 8 is a cross sectional view showing the configuration of the battery pack unit according to the fourth embodiment. Fig. 8 shows the battery pack unit disposed on one of the sides of the vehicle.

As shown in Fig. 8, a battery pack unit 1C according to the fourth embodiment includes a battery pack 800C, a bracket 4C, and a shock absorbing member 900C. Bracket 4C constitutes a portion of housing 500C. Specifically, bracket 4C constitutes a pack bottom portion 510C. Housing 500C is constituted of: pack bottom portion 510C constituted of the portion of bracket 4C; and a pack cover portion 520C. Shock absorbing member 900C is attached to a side surface 511C of pack bottom portion 510C.

In battery pack unit 1C, portions of shock absorbing member 900C constitute a side guard 3C. Specifically, each of the upper and lower portions of shock absorbing member 900C has a portion at which a plurality of metal plates constituting an outer tubular portion 920C and inner tubular portions 910C are stacked and which extends in the upward/downward direction, and these portions of the upper and lower portions of shock absorbing member 900C and the metal plates constituting outer tubular portion 920C located opposite to the battery pack 800C side function as side guard 3C.

In battery pack unit 1C according to the fourth embodiment, since bracket 4C constitutes a portion of housing 500C, the weight of battery pack unit 1C can be reduced. Further, no connection member for supporting side guard 3C is necessary, thereby attaining a reduced weight of battery pack unit 1C. Further, the number of steps in assembling battery pack unit 1C can be reduced.

Although the embodiments of the present invention have been described and illustrated in detail, it is clearly understood that the same is by way of illustration and example only and is not to be taken by way of limitation, the scope of the present invention is defined by the appended claims only.

## Claims

1. A vehicle comprising a ladder frame (2), a side guard (3, 3A, 3B, 3C) and battery pack unit (1, 1A, 1B, 1C) disposed in said vehicle, the vehicle battery pack unit (1, 1A, 1B, 1C) comprising:
a battery pack (800, 800C) including a housing (500, 500C) and a power storage module (10) accommodated in the housing (500, 500C);
a bracket (4, 4A, 4C) attached to the ladder frame (2) and supporting the power storage module (10) between the ladder frame (2) and the side guard (3, 3A, 3B, 3C); and
a shock absorbing member (900, 900B, 900C) disposed beside the power storage module (10),
**characterized in that** the shock absorbing member (900, 900B, 900C) is attached to a side surface of the housing (500, 500C), wherein
the side guard (3) is disposed at a lower portion of a side surface of the vehicle and fixed to the ladder frame (2) and the shock absorbing member (900) is connected to the side guard (3).

2. The vehicle according to claim 1, wherein a portion of the bracket (4A) constitutes the side guard (3A).

3. The vehicle according to claim 1, wherein a portion of the shock absorbing member (900B, 900C) constitutes the side guard (3B, 3C).

4. The vehicle according to claim 1, wherein the bracket (4C) constitutes a portion of the housing (500C).

## Patentansprüche

1. Fahrzeug, aufweisend einen Leiterrahmen (2), einen Seitenschutz (2, 3A, 3B, 3C) und eine Batteriepackeinheit (1, 1A, 1B, 1C), die sich in dem Fahrzeug befindet, wobei die Fahrzeugbatteriepackeinheit (1, 1A, 1B, 1C) aufweist:
ein Batteriepack (800, 800C) einschließlich eines Gehäuses (500, 500C) und eines Leistungsspeichermoduls (10), das in dem Gehäuse (500, 500C) untergebracht ist;
eine Halterung (4, 4A, 4C), die an dem Leiterrahmen (2) befestigt ist und das Leistungsspeichermodul (10) zwischen dem Leiterrahmen (2) und dem Seitenschutz (3, 3A, 3B, 3C) hält; und
ein Stoßdämpferelement (900, 900B, 900C), das sich neben dem Leistungsspeichermodul (10) befindet,
**dadurch gekennzeichnet, dass** das Stoßdämpferelement (900, 900B, 900C) an einer Seitenfläche des Gehäuses (500, 500C) befestigt ist, wobei
sich der Seitenschutz (3) an einem unteren Abschnitt einer Seitenfläche des Fahrzeugs befindet und an dem Leiterrahmen (2) befestigt ist und das Stoßdämpferelement (900) mit dem Seitenschutz (3) verbunden ist.

2. Fahrzeug nach Anspruch 1, wobei ein Abschnitt der Halterung (4A) den Seitenschutz (3A) bildet.

3. Fahrzeug nach Anspruch 1, wobei ein Abschnitt des Stoßdämpferelements (900B, 900C) den Seitenschutz (3B, 3C) bildet.

4. Fahrzeug nach Anspruch 1, wobei die Halterung (4C) einen Abschnitt des Gehäuses (500C) bildet.

## Revendications

1. Véhicule comprenant un châssis en échelle (2), une protection latérale (3, 3A, 3B, 3C) et une unité de bloc de batterie (1, 1A, 1B, 1C) disposée dans ledit véhicule, l'unité de bloc de batterie de véhicule (1, 1A, 1B, 1C) comprenant :
un bloc de batterie (800, 800C) comprenant un logement (500, 500C) et un module de stockage d'énergie (10) reçu dans le logement (500, 500C) ;
un support (4, 4A, 4C) fixé sur le châssis en échelle (2) et supportant le module de stockage d'énergie (10) entre le châssis en échelle (2) et la protection latérale (3, 3A, 3B, 3C) ; et
un élément d'amortissement des chocs (900, 900B, 900C) disposé près du module de stockage d'énergie (10),
**caractérisé en ce que** l'élément d'amortissement des chocs (900, 900B, 900C) est fixé sur une surface latérale du logement (500, 500C),
la protection latérale (3) étant disposée au niveau d'une partie inférieure d'une surface latérale du véhicule et fixée sur le châssis en échelle (2) et l'élément d'amortissement des chocs (900) est relié à la protection latérale (3).

2. Véhicule selon la revendication 1, dans lequel une partie du support (4A) constitue la protection latérale (3A).

3. Véhicule selon la revendication 1, dans lequel une partie de l'élément d'amortissement des chocs (900B, 900C) constitue la protection latérale (3B, 3C).

4. Véhicule selon la revendication 1, dans lequel le support (4C) constitue une partie du logement (500C).
